## Europäisches Patentamt

## European Patent Office

## Office européen des brevets

(19)

(11) Veröffentlichungsnummer : **0 106 299**
**B1**

(12) **EUROPÄISCHE PATENTSCHRIFT**

(45) Veröffentlichungstag der Patentschrift :
12.02.86

(51) Int. Cl.⁴ : **A 01 C   7/04**

(21) Anmeldenummer : **83110091.2**

(22) Anmeldetag : **10.10.83**

(54) **Vereinzelungselement für pneumatische Einzelkornsämaschinen.**

(30) Priorität : **16.10.82 DE 3238435**

(43) Veröffentlichungstag der Anmeldung :
**25.04.84 Patentblatt 84/17**

(45) Bekanntmachung des Hinweises auf die Patenterteilung : **12.02.86 Patentblatt 86/07**

(84) Benannte Vertragsstaaten :
**AT BE FR GB IT NL SE**

(56) Entgegenhaltungen :
**FR-A- 2 249 521**
**FR-A- 2 333 430**
**FR-A- 2 359 571**
**FR-A- 2 394 975**

(73) Patentinhaber : **Firma H. Fähse & Co.**
**Schulstrasse 51**
**D-5160 Düren (DE)**

(72) Erfinder : **Gugenhan, Heinrich**
**Schulstrasse 51**
**D-5160 Düren (DE)**

(74) Vertreter : **König, Werner, Dipl.-Ing.**
**Habsburgerallee 23-25**
**D-5100 Aachen (DE)**

Jouve, 18, rue St-Denis, 75001 Paris, France

## Beschreibung

Die Erfindung betrifft ein Vereinzelungselement für pneumatische Einzelkornsämaschinen mit einer um eine im wesentlichen waagerechte Achse drehbar angeordneten, mit auf einem Lochkreis liegenden Sauglöchern versehenen Lochplatte, an deren einer Seite Unterdruck anliegt, während sie an ihrer anderen Seite im unteren Bereich durch einen Saatgutvorrat geführt wird, aus dem sie bei ihrer Drehung an ihren Löchern gehaltene Saatkörner mitnimmt, wobei das Vereinzelungselement eine einstellbar gelagerte Trägerplatte hat, die auf ihrer dem Lochkreis zugewandten wirksamen Seite mehrere aufeinanderfolgende, gegenüber der Trägerplatte entgegen einer Federwirkung unabhängig voneinander in einem begrenzten Bereich elastisch verlagerbare Wirkflächenabschnitte aufweist, die an den Saatkörnern aufeinanderfolgend angreifen, und parallel zur Platte verlaufend von radial außerhalb in die Bewegungsbahn der Löcher in Drehrichtung zunehmend hineinragen.

Es ist bereits seit langem bekannt, daß bei pneumatisch arbeitenden Einzelkornsämaschinen, die eine Lochplatte in Form einer zwischen zwei Kammern beweglichen Scheibe oder aber in Form einer Deckscheibe einer drehbar gelagerten Trommel aufweisen, pro Saugloch der Platte zuweilen mehrere Sattkörner aus dem Saatgutvorrat mitgeführt werden können. Davon ausgehend sind bei derartigen Einzelkornsämaschinen bisher eine Reihe von Vereinzelungselementen eingesetzt worden, um nach Möglichkeit sicherzustellen, daß pro Saugloch nur ein Saatkorn der Abwurfstelle zugeführt wird.

Bei einem bekannten Vereinzelungselement (DE-B 27 01 982) ist vorgesehen, daß die von der Lochplatte abgewandte wirksame Seite dieses Elements eine über den gesamten Wirkungsbereich des Elements durchgehende einheitliche Wirkfläche ist, die von kontinuierlich sich aneinander anschließenden ᐧ Wirkflächenabschnitten aus unterschiedlichen Materialien mit differierenden Reibungsbeiwerten gebildet ist. Dabei wird das Maß der Reibung zwischen Saatkorn und Wirkfläche des Vereinzelungselements über den Wirkungsbereich dieses Elements variiert, indem Abschnitte mit geringerem Reibungsbeiwert und solche mit höherem Reibungsbeiwert abwechseln. Die führt zu einer Bewegung der vor einem Saugloch befindlichen Kornanhäufungen und auf diese Weise zu einem guten Vereinzelungseffekt. Ferner ist bei diesem bekannten Vereinzelungselement aber zu beobachten, daß in einem Saugloch verhakte oder darin festsitzende Körner durch das Vereinzelungselement abgeschert oder anderweitig beschädigt werden.

Es ist ferner bekannt (FR-A-2 333 430), zur Vereinzelung von an den Sauglöchern einer Lochplatte haftenden Saatkörnern nachgiebige Borsten zu verwenden, die auf einer einstellbaren Trägerplatte in einer Ebene nebeneinander angeordnet sind. Die freien Enden der Borsten können dabei entsprechend dem gewünschten Profil angeordnet sein.

Die Borsten sind jede für sich nicht nur in einer solchen Ebene verformbar, die parallel zur Lochplatte verläuft. Sie können vielmehr auch außerhalb dieser Ebene sich verformen und eventuellen Widerständen ausweichen. Ihre Einwirkung auf die zu vereinzelnden Saatkörner ist deshalb nicht in der gewünschten Weise steuerbar. Dicht nebeneinander angeordnete Borsten können zwischen sich Saatkörner auch dann festklemmen, wenn die Borsten in einer Ebene angeordnet sind. In Abhängigkeit von der jeweiligen Auslenkung einer Borste und vom jeweiligen Angriffspunkt werden benachbarte Borsten ebenfalls in einer nicht vorhersehbaren Weise verformt, wodurch das Funktionieren unüberschaubar wird. Da die Borsten selbst in hohem Maße elastisch verformbar sein sollen, ist es nicht möglich, für die mit den Saatkörnern zusammenarbeitenden Abschnitte das Material entsprechend den Forderungen der Verschleißfestigkeit zu wählen.

Schließlich ist ein Vereinzelungselement der eingangs genannten Art bekannt (FR-A-2 249 521), bei dem mit der Tragplatte mehrere elastische Federelemente verbunden sind, die an einem Ende an die Tragplatte angehängt und an ihrem anderen Ende umgebogen sind und die Tragplatte umgreifen. Zwischen diesen beiden Enden verlaufen diese aus Draht gebildeten Federelemente geneigt in Richtung auf den Lochkreis der Lochplatte. Ihre Kontur ist im wesentlichen zahnförmig.

Ein Ausweichen der Federelemente ist grundsätzlich möglich. Es geschieht aber aufgrund einer elastischen Verformung dieses Elements selbst. Dabei sind das Maß der Verformung sowie die dabei auf ein Saatkorn wirkenden Kräfte von Zufälligkeiten abhängig. Auch die Position dieser in sich nachgiebigen Federelemente in bezug auf die Lochplatte ist nicht sicher vorhersehbar. Schließlich ist es auch bei diesem Vereinzelungselement nicht möglich, allein die Wirkflächen aus einem Material herzustellen, welches Verschleißerscheinungen zuverlässig verhindert.

Ausgehend von diesem Stand der Technik liegt der Erfindung die Aufgabe zugrunde, bei einem Vereinzelungselement eine hohe Qualität der Einzelkornablage dadurch zu gewährleisten, daß das Zusammenarbeiten der Wirkflächen mit den zu vereinzelnden Saatkörnern insbesondere hinsichtlich Angriffsort und Auslenkkräften in hohem Maße reproduzierbar ist.

Diese Aufgabe wird bei einem Vereinzelungselement der eingangs erwähnten Art erfindungsgemäß dadurch gelöst, daß jeder Wirkflächenabschnitt des Vereinzelungselements durch einen Endabschnitt eines Fingers gebildet ist, daß an den Fingern Federelemente angreifen, die deren Wirkflächenabschnitte von radial außerhalb des Lochkreises in die Bewegungsbahn der an den Löchern haftenden Saatkörner hineinbewegen und daß jeder Finger mit einem die Ausgangsposition dieses Fingers entgegen der Wirkung des zugehörigen Federelements definierenden, auf der Trägerplatte vorgesehenen Anschlag zusammenarbeitet.

Die Wirkflächenabschnitte können dabei entgegen einer Federwirkung den an Sauglöchern fest verhakten Saatkörnern ausweichen, so daß es nicht zu einem Abscheren solcher Saatkörner kommt. Die durch den zugehörigen Wirkflächenabschnitt ausgeübte Kraft ist durch die Art, Beschaffenheit und Anordnung der Federelemente wählbar. Dabei ergibt sich eine definierte Ausgangsstellung für jeden Finger, wodurch die Einstellung des gesamten Vereinzelungselements zum Lochkreis in Abhängigkeit von dem jeweils betroffenen Saatgut ohne weiteres möglich ist und gleiche Ausgangspositionen für die aufeinanderfolgenden Vereinzelungsvorgänge geschaffen werden.

Das erfindungsgemäße Vereinzelungselement kann so ausgebildet sein, daß die Finger mit der Trägerplatte schwenkbar verbunden sind und dieser gegenüber um eine im wesentlichen parallel zur Achse der Lochplatte verlaufende Achse entgegen der Wirkung eines Federelements der Drehrichtung der Lochplatte folgend unabhängig von den übrigen Fingern verschwenkbar sind. Dabei führen die Finger eine Schwenkbewegung durch, bei der sie entsprechend der Drehrichtung der Lochplatte im gleichen Drehsinn mitbewegt werden und somit in einem Saugloch festsitzenden Saatkörnern folgen können, ohne diese abzuscheren.

Das erfindungsgemäße Vereinzelungselement kann so ausgebildet sein, daß jeder Finger als zweiarmiger Hebel ausgebildet ist, dessen Schwenkachse zwischen dem den Wirkflächenabschnitt bildenden einen Endabschnitt und dem Angriffspunkt des Federelements liegt.

Das erfindungsgemäße Vereinzelungselement kann so ausgebildet sein, daß jeder Finger als einarmiger Hebel ausgebildet ist, bei dem sowohl der den Wirkflächenabschnitt bildende eine Endabschnitt als auch der Angriffspunkt des Federelements auf der gleichen Seite der Schwenkachse des Fingers liegen.

Das erfindungsgemäße Vereinzelungselement kann so ausgebildet sein, daß die Finger an der Trägerplatte geradlinig geführt beweglich gelagert sind. Dabei führen die einzelnen Finger reine translatorische Bewegungen aus.

Das erfindungsgemäße Vereinzelungselement kann so ausgebildet sein, daß die Finger derart geführt sind, daß ihre Wirkflächenabschnitte der Drehrichtung der Lochplatte zum Teil entgegengerichtet sind. Dies bedeutet, daß auch die Umfangskomponente der die Saatkörner an den Sauglöchern haltenden Kraft an der Verschiebung der Finger mitwirkt.

Das erfindungsgemäße Vereinzelungselement kann so ausgebildet sein, daß die Federelemente der einzelnen Finger als Schraubenfedern ausgebildet sind.

Das erfindungsgemäße Vereinzelungselement kann so ausgebildet sein, daß die Federelemente der einzelnen Finger als Blattfedern ausgebildet sind.

Daneben kommen auch noch andere Federelemente in Betracht, welche geeignet sind, einen Hebel nach vorangegangener Auslenkung gegenüber einer Ausgangslage in diese zurückzuführen.

Das erfindungsgemäße Vereinzelungselement kann so ausgebildet sein, daß die Wirkflächenabschnitte der einzelnen Finger zum Lochkreis und zur Lochplatte hin geneigt sind. Durch diese Ausbildung wird ein Untergreifen der abzuwerfenden Saatkörner gefördert und damit die Beanspruchung der Wirkflächenabschnitte und der Saatkörner reduziert.

Das erfindungsgemäße Vereinzelungselement kann so ausgebildet sein, daß sich jeder Wirkflächenabschnitt — in Drehrichtung der Lochplatte betrachtet — bogenförmig dem Lochkreis nähert. Auf diese Weise wird verhindert, daß durch eine schlagartige Beanspruchung der einzelnen an den Sauglöchern haftenden Saatkörner ein zu hartes Angreifen erfolgt, das dazu führen könnte, alle vor einem Saugloch haftenden Saatkörner abzuwerfen. Jeder Finger ist bei allen Ausführungsformen vorzugsweise mit einem Wirkflächenabschnitt versehen, kann aber auch mehrere haben.

Ferner kann das erfindungsgemäße Vereinzelungselement so ausgebildet sein, daß alle Finger untereinander kongruent sind. Auf diese Weise sind die Finger rationell herstellbar. Die gewünschte Positionierung der Wirkflächenabschnitte der einzelnen Finger zum Lochkreis kann dann in einfacher Weise durch geeignete Positionierung der Drehachsen und/oder Anschläge der Finger auf der Trägerplatte vorgenommen werden.

Im folgenden Teil der Beschreibung werden einige Ausführungsformen des erfindungsgemäßen Vereinzelungselements anhand von Zeichnungen beschrieben. Es zeigt:

Figur 1 eine Draufsicht auf eine erste Ausführungsform des erfindungsgemäßen Vereinzelungselements mit einem Teil einer Lochplatte, wobei die Federelemente als Schraubenfedern ausgebildet sind und als Druckfedern wirken,

Figur 2 eine der Fig. 1 ähnliche Ausführungsform, bei der die Federelemente als Schraubenfedern ausgebildet sind und als Zugfedern wirken (nur ein Finger dargestellt),

Figur 3 eine den Fig. 1 und 2 ähnliche Ausführungsform, bei der die Federelemente als Blattfedern ausgebildet sind (nur ein Finger dargestellt),

Figur 4 eine Teilansicht einer weiteren Ausführungsform mit einem Finger in Form eines einarmigen Hebels (nur ein Finger dargestellt),

Figur 5 eine Teilansicht einer weiteren Ausführungsform mit geradlinig geführten Fingern (nur ein Finger dargestellt) und

Figur 6 einen Schnitt nach der Linie A-A in Fig. 2.

Das erfindungsgemäße Vereinzelungselement hat eine Trägerplatte 1, die nahe ihrem einen Ende eine Rundloch 2 aufweist, um dessen Achse das Vereinzelungselement in einem nicht gezeigten Gehäuse schwenkbar festgelegt ist. An seinem gegenüberliegenden Ende hat die Trägerplatte 1 einen Führungsausschnitt 3, in den eine nicht dargestellte Klemmschraube eingreift, um damit die Schwenkstellung des Vereinzelungselements festzulegen.

Das Vereinzelungselement arbeitet mit einer Lochplatte 4 zusammen, die nicht Gegenstand der vorliegenden Erfindung ist. Diese Lochplatte 4 hat auf einem Lochkreis 5 eine Anzahl von Sauglöchern 6, die jeweils kleiner sind als die Abmessungen der zu säenden Saatkörner. Die Lochplatte 4 ist um ihren Mittelpunkt drehbar.

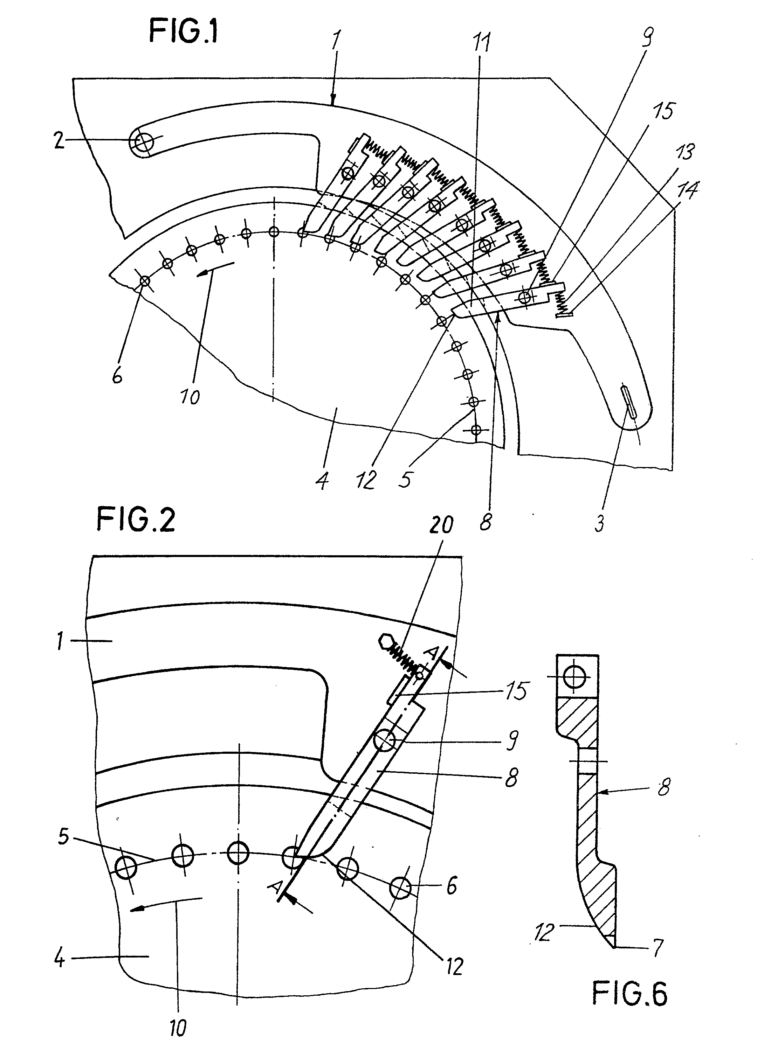

Mit der Trägerplatte 1 sind bei der Ausführungsform gemäß Fig. 1 acht Finger 8 verbunden. Die Verbindung zwischen den Fingern 8 und der Trägerplatte 1 erfolgt über Drehbolzen 9, die im wesentlichen parallel zueinander sowie zur Drehachse der Lochplatte 4 verlaufen und Schwenkachsen für die Finger 8 bilden.

Bei der Ausführungsform gemäß Fig. 1 sind alle Finger 8 untereinander gleich. Dennoch ragen die Endabschnitte der Finger 8 in Drehrichtung 10 der Lochplatte 4 betrachtet immer weiter in die Bewegungsbahn von an der Lochplatte 4 haftenden Saatkörnern hinein. Dies wird dadurch erreicht, daß die Drehbolzen 9 für die einzelnen Finger 8 auf der Trägerplatte 1 entsprechend positioniert sind.

Jeder Finger 8 hat an seinem einen Endabschnitt 11 einen Wirkflächenabschnitt 12, der bogenförmig ausgeführt ist, so daß sich dieser Wirkflächenabschnitt in Drehrichtung 10 der Lochplatte 4 dem Lochkreis 5 nähert. Überdies ist jeder Finger 8 in seinem Wirkflächenabschnitt 12 zum Rand hin abgeflacht (Fig. 6), um ein Untergreifen der an den Sauglöchern 6 haftenden Saatkörner zu ermöglichen. Die Außenkante 7 der Wirkflächenabschnitte 12 liegt unmittelbar an der Lochplatte 4 an.

Bei der Ausführungsform nach Fig. 1 greift an jedem Finger 8 an dessen radial außen liegendem Ende eine Schraubenfeder 13 an, die als Druckfeder ausgebildet ist und sich an ihrem anderen Ende an einem Anschlag 14 abstützt, der mit der Trägerplatte 1 fest verbunden ist. Die Schraubenfeder 13 ist in der dargestellten Ausführungsform bestrebt, den Finger 8 im Gegenuhrzeigersinn zu drehen. Einer solchen Drehbewegung steht ein Anschlag 15 entgegen, an dem sich wiederum eine Schraubenfeder für den benachbarten Finger abstützt. Die Schraubenfeder 13 drückt also den Finger 8 gegen den Anschlag 15, so daß auf diese Weise eine Ausgangsposition für den Wirkflächenabschnitt 12 dieses Fingers 8 bestimmt wird.

Wenn nun ein in einem Saugloch 6 festsitzendes Saatkorn an dem Wirkflächenabschnitt 12 eines Fingers 8 in Drehrichtung 10 vorbeigeführt wird, so kann der Finger 8 diesem Saatkorn folgen und ihm ausweichen, indem er sich um ein entsprechendes Maß um seinen Drehbolzen 9 und die dadurch gebildete Schwenkachse herum verschwenkt. Dabei wird die Schraubenfeder 13 zusammengedrückt. Sobald der Wirkflächenabschnitt 12 wieder freikommt, wird der Finger 8 in seine durch den Anschlag 15 definierte Ausgangsstellung zurückgebracht. Aus der Beschreibung der Anordnung und des Funktionierens des einen Fingers 8 ergibt sich auch Aufbau und Funktion der übrigen Finger. Wichtig ist dabei, daß die Bewegungen der einzelnen Finger nicht miteinander gekoppelt sind. Die Zahl der Finger kann den jeweiligen Erfordernissen angepaßt sein.

Das gesamte Vereinzelungselement kann zur Anpassung an anderes Saatgut um die Achse des Rundlochs 2 herum verschwenkt und eingestellt werden.

Die Ausführungform gemäß Fig. 2, von der wie von allen folgenden nur ein Finger dargestellt ist, obwohl das Vereinzelungselement stets eine Mehrzahl solcher Finger aufweist, weicht von derjenigen nach Fig. 1 nur dadurch ab, daß hier die Federelemente als Schraubenfedern 20 ausgebildet sind, die als Zugfedern wirken. Diese Federn 20 ziehen ein Ende eines Fingers 8 gegen einen Anschlag 15, um auf diese Weise eine Ausgangsposition für den Wirkflächenabschnitt 12 dieses Fingers zu definieren.

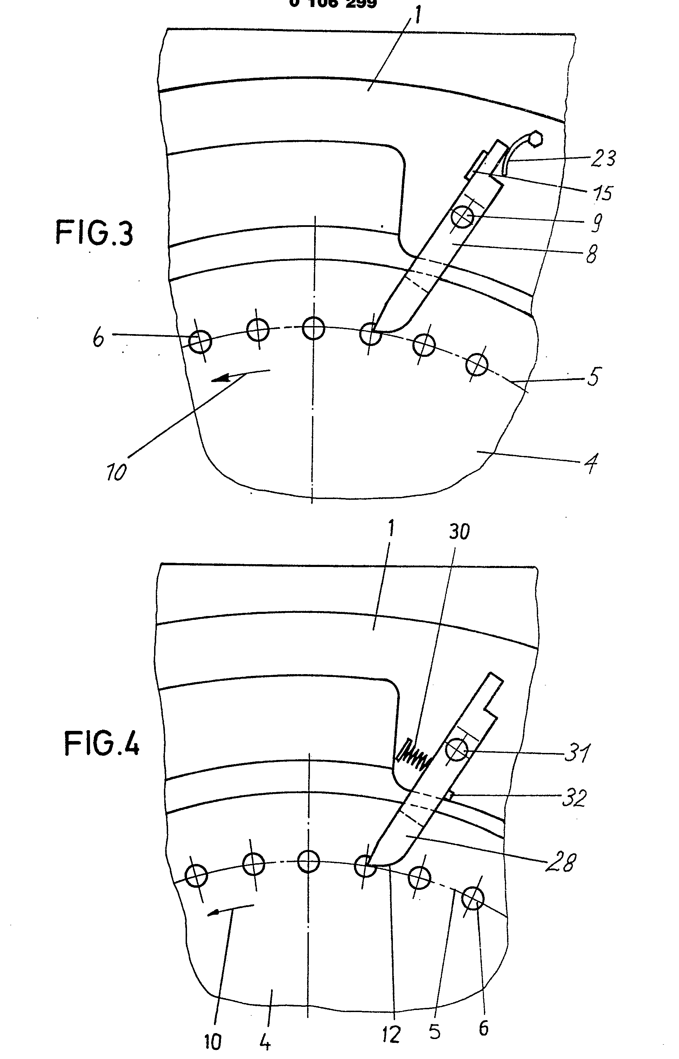

Die Ausführungsform gemäß Fig. 3 unterscheidet sich von den zuvor beschriebenen Ausführungsformen nur dadurch, daß an dem äußeren Ende des Fingers 8 eine Blattfeder 23 angreift, welche den Finger 8 im Gegenuhrzeigersinn federnd gegen einen Anschlag 15 drückt.

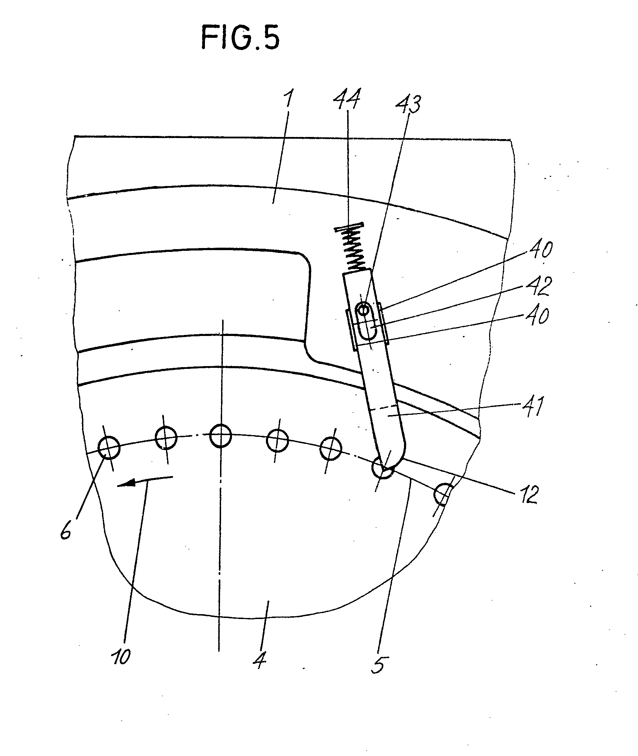

Bei den Ausführungformen nach den Fig. 1 bis 3 ist der Drehbolzen jeweils zwischen dem Wirkflächenabschnitt und dem Angriffspunkt des Federelements angeordnet. Fig. 4 macht deutlich, daß die Finger auch als einarmige Hebel 28 ausgebildet sein können, bei denen der Wirkflächenabschnitt 12 und der Angriffspunkt eines Federelements 30 auf ein und derselben Seite einer Schwenkachse 31 liegen. Auch bei dieser Ausführungsform ist ein Anschlag 32 vorgesehen, der die Bewegung des Fingers im Gegenuhrzeigersinn begrenzt und somit eine Ausgangsposition definiert. Auch bei Ausführung des Fingers als einarmiger Hebel kann das Federelement 30 verschiedenartig ausgebildet sein. Insbesondere kommen hierfür Schraubenfedern in Betracht, die als Druckfedern oder als Zugfedern eine gegen den Anschlag 32 gerichtete Kraft auf den Finger ausüben. Es können aber auch Blattfedern oder ähnliche Federn Verwendung finden.

Die Ausführungsform nach Fig. 5 zeichnet sich gegenüber der zuvor beschriebenen dadurch aus, daß auf der Trägerplatte 1 Führungen 40 vorgesehen sind, zwischen denen ein Finger 41 geradlinig geführt und verschieblich gelagert ist. Der Finger 41 hat ein Langloch 42, in das ein Bolzen 43 eingreift, der mit der Trägerplatte 1 fest verbunden ist und einen Anschlag für die maximale Auslenkung des Fingers 41 in Richtung auf den Lochkreis 5 bildet. Am radial außen liegenden Ende des Fingers 41 greift ein Federelement an, bei dem es sich gemäß dargestellter Ausführungsform um eine als Druckfeder wirkende Schraubenfeder 44 handelt. An seinem anderen Ende hat der Finger 41 einen Wirkflächenabschnitt 12, der bogenförmig ausgebildet ist und entsprechend Fig. 6 profiliert sein kann.

Der Finger 41 ist in einer Richtung geführt, die der Drehrichtung der Lochplatte 4 ein wenig entgegengerichtet ist.

Greift an dem Wirkflächenabschnitt 12 dieses Fingers 41 ein in einem Saugloch 6 fest verhaktes Saatkorn an, so weicht der Finger nach radial außen zurück und läßt dieses Saatkorn passieren, ohne es zu beschädigen.

## Ansprüche

1. Vereinzelungselement für pneumatische Einzelkornsämaschinen mit einer um eine im wesentlichen waagerechte Achse drehbar angeordneten, mit auf einem Lochkreis (5) liegenden Sauglöchern (6) versehenen Lochplatte (4), an deren einer Seite Unterdruck anliegt, während sie an ihrer anderen Seite im unteren Bereich durch einen Saatgutvorrat geführt wird, aus dem sie bei ihrer Drehung an ihren·Löchern (6) gehaltene Saatkörner mitnimmt, wobei das Vereinzelungselement eine einstellbar gelagerte Trägerplatte (1) hat, die auf ihrer dem Lochkreis (5) zugewandten wirksamen Seite mehrere aufeinanderfolgende, gegenüber der Trägerplatte (1) entgegen einer Federwirkung unabhängig voneinander in einem begrenzten Bereich elastisch verlagerbare Wirkflächenabschnitte (12) aufweist, die an den Saatkörnern aufeinanderfolgend angreifen, und parallel zur Lochplatte (4) verlaufend von radial außerhalb in die Bewegungsbahn der Löcher (6) in Drehrichtung zunehmend hineinragen, dadurch gekennzeichnet, daß jeder Wirkflächenabschnitt (12) des Vereinzelungselements durch einen Endabschnitt eines Fingers (8 ; 28 ; 41) gebildet ist, daß an den Fingern Federelemente (13 ; 20 ; 23 ; 30 ; 44) angreifen, die deren Wirkflächenabschnitte (12) von radial außerhalb des Lochkreises (5) in die Bewegungsbahn der an den Löchern (6) haftenden Saatkörner hineinbewegen und daß jeder Finger (8 ; 28 ; 41) mit einem die Ausgangsposition dieses Fingers entgegen der Wirkung des zugehörigen Federelements (13 ; 20 ; 23 ; 30 ; 44) definierenden, auf der Trägerplatte (1) vorgesehenen Anschlag (15 ; 32 ; 43) zusammenarbeitet.

2. Vereinzelungselement nach Anspruch 1, dadurch gekennzeichnet, daß die Finger (8 ; 28) mit der Trägerplatte (1) schwenkbar verbunden sind und dieser gegenüber um eine im wesentlichen parallel zur Achse der Lochplatte (4) verlaufende Achse entgegen der Wirkung eines Federelements (13 ; 20 ; 23 ; 30) der Drehrichtung (10) der Lochplatte (4) folgend unabhängig von den übrigen Fingern (8 ; 28) verschwenkbar sind.

3. Vereinzelungselement nach Anspruch 1 oder 2, dadurch gekennzeichnet, daß jeder Finger (8) als zweiarmiger Hebel ausgebildet ist, dessen Schwenkachse (9) zwischen dem den Wirkflächenabschnitt (12) bildenden einen Endabschnitt und dem Angriffspunkt des Federelements (13 ; 20 ; 23) liegt.

4. Vereinzelungselement nach einem der vorhergehenden Ansprüche, dadurch gekennzeichnet, daß jeder Finger (28) als einarmiger Hebel ausgebildet ist, bei dem sowohl der den Wirkflächenabschnitt (12) bildende eine Endabschnitt als auch der Augriffspunkt des Federelements (30) auf der gleichen Seite der Schwenkachse (31) des Fingers (28) liegen.

5. Vereinzelungselement nach Anspruch 1, dadurch gekennzeichnet, daß die Finger (41) an der Trägerplatte (1) geradlinig geführt beweglich gelagert sind.

6. Vereinzelungselement nach Anspruch 5, dadurch gekennzeichnet, daß die Finger (41) derart geführt sind, daß ihre Wirkflächenabschnitte (12) der Drehrichtung (10) der Lochplatte (4) zum Teil entgegengerichtet sind.

7. Vereinzelungselement nach einem der vorhergehenden Ansprüche, dadurch gekennzeichnet, daß die Federelemente (13 ; 20 ; 30 ; 44) der einzelnen Finger als Schraubenfedern ausgebildet sind.

8. Vereinzelungselement nach einem der Ansprüche 1 bis 7, dadurch gekennzeichnet, daß die Federelemente (23) der einzelnen Finger als Blattfedern ausgebildet sind.

9. Vereinzelungselement nach einem der vorhergehenden Ansprüche, dadurch gekennzeichnet, daß die Wirkflächenabschnitte (12) der einzelnen Finger (8 ; 28 ; 41) zum Lochkreis (5) und zur Lochplatte (4) hin geneigt sind.

10. Vereinzelungselement nach einem der vorhergehenden Ansprüche, dadurch gekennzeichnet, daß sich jeder Wirkflächenabschnitt (12) — in Drehrichtung (10) der Lochplatte (4) betrachtet — bogenförmig dem Lochkreis (5) nähert.

11. Vereinzelungselement nach einem der vorhergehenden Ansprüche, dadurch gekennzeichnet, daß alle Finger (8 ; 28 ; 41) untereinander kongruent sind.

## Claims

1. Separating element for pneumatic seed sowing machines with an apertured plate (4) which is rotatable about an essentially horizontal axis and provided with suction holes (6) arranged in a hole circle (5), and which has a vacuum applied to one side, while on its other side in the lower region it is guided through a seed stock from which it entrains seeds which are retained against its holes (6) as it rotates, the separating element having an adjustably mounted carrier plate (1) which, on its active side facing towards the hole circle (5), comprises several successive active surface portions (12) which can be displaced elastically relative to the carrier plate (1) against the action of a spring independently of each other within a limited range and which engage the seeds successively and, extending parallel to the apertured plate (4), project from a point radially outside, into the path of travel of the hole (6), progressing in the direction of rotation, characterised by the fact that each active surface portion (12) of the separating element is formed by an end portion of a finger (8 ; 28 ; 41), that the fingers are engaged by spring elements (13 ; 20 ; 23 ; 30 ; 44) which move the active surface portions (12) thereof from a point radially outside the hole circle (5) into the path of travel of the seeds clinging to the holes (6), and that each finger (8 ; 28 ; 41) coacts with a stop (15 ; 32 ; 43) provided on the carrier plate (1) and defining the starting position of this finger against the action of the associated spring element (13 ; 20 ; 23 ; 30 ; 44).

2. Separating element according to claim 1, characterised by the fact that the fingers (8 ; 28) are pivotably connected to the carrier plate (1) and are pivotable relative to the latter about an axis extending essentially parallel to the axis of the apertured plate (4) against the action of a spring element (13 ; 20 ; 23 ; 30), following the direction of rotation (10) of the apertured plate (4), independently of the remaining fingers (8 ; 28).

3. Separating element according to claim 1 or 2, characterised by the fact that each finger (8) is constructed as a two-armed lever whose pivot axis (9) is located between the one end portion forming the active surface portion (12) and the point of engagement of the spring element (13 ; 20 ; 23).

4. Separating element according to one of the preceding claims, characterised by the fact that each finger (28) is constructed as a one-armed lever, in which both the one end portion forming the active surface portion (12) and the point of engagement of the spring element (30) are located on the same side of the pivot axis (31) of the finger (28).

5. Separating element according to claim 12, characterised by the fact that the fingers (41) are mounted movably on the carrier plate (1), being guided rectilinearly.

6. Separating element according to claim 5, characterised by the fact that the fingers (41) are guided in such a way that their active surface portions (12) face partially away from the direction of rotation (10) of the apertured plate (4).

7. Separating element according to one of the preceding claims, characterised by the fact that the spring elements (13 ; 20 ; 30 ; 44) of the individual fingers are constructed as coil springs.

8. Separating element according to one of claims 1 to 7, characterised by the fact that the spring elements (23) of the individual fingers are constructed as leaf springs.

9. Separating element according to one of the preceding claims, characterised by the fact that the active surface portions (12) of the individual fingers (8 ; 28 ; 41) are inclined towards the hole circle (5) and the apertured plate (4).

10. Separating element according to one of the preceding claims, characterised by the fact that each active surface portion (12), as seen in the direction of rotation (10) of the apertured plate (4), tends arcuately towards the hole circle (5).

11. Separating element according to one of the preceding claims, characterised by the fact that all the fingers (8 ; 28 ; 41) are congruent with each other.

## Revendications

1. Elément sélecteur pour semoirs pneumatiques fonctionnant grain par grain, avec une plaque à trous (4) montée pour pouvoir tourner autour d'un axe en principe horizontal, pourvue de trous d'aspiration (6) se trouvant sur un cercle de trous (5), plaque d'un côté de laquelle s'applique une sous-pression, tandis que de son autre côté, dans la région inférieure, elle est conduite à travers une réserve de semences d'où elle emmène, dans sa rotation, des grains de semences retenus sur ses trous (6), l'élément sélecteur comportant une plaque porteuse (1) montée de manière réglable, qui, de son côté actif orienté vers le cercle de trous (5), présente plusieurs parties de surfaces actives (12) successives, déplaçables élastiquement à l'encontre de l'action de ressorts, indépendamment l'une de l'autre, dans une région limitée, vis-à-vis de la plaque porteuse (1), lesquelles parties s'attaquent successivement aux grains de semences et qui, en s'étendant parallèlement à la plaque à trous (4), pénètrent de plus en plus, dans le sens de la rotation, à partir de positions radialement extérieures, dans la trajectoire des trous (6), caractérisé en ce que chaque partie de surface active (12) de l'élément sélecteur est formée par une partie d'extrémité d'un doigt (8 ; 28 ; 41) ; en ce qu'aux doigts s'attaquent des éléments ressorts (13 ; 20 ; 23 ; 30 ; 44) qui déplacent vers l'intérieur leurs parties de surfaces actives (12), à partir de points radialement à l'extérieur du cercle à trous (5), dans la trajectoire des grains de semences adhérant aux trous (6) ; et en ce que chaque doigt (8 ; 28 ; 41) coopère avec une butée (15 ; 32 ; 43) prévue sur la plaque porteuse (1), définissant la position de départ de ce doigt vis-à-vis de l'action de l'élément ressort correspondant (13 ; 20 ; 23 ; 30 ; 44).

2. Elément sélecteur suivant la revendication 1, caractérisé en ce que les doigts (8 ; 28) sont reliés à la plaque porteuse (1) de façon à pouvoir pivoter et peuvent pivoter, vis-à-vis de celle-ci, autour d'un axe s'étendant en principe parallèlement à l'axe de la plaque à trous (4), à l'encontre de l'action d'un élément ressort (13 ; 20 ; 23 ; 30), suivant le sens de rotation (10) de la plaque à trous (4), indépendamment des autres doigts (8 ; 28).

3. Elément sélecteur suivant la revendication 1 ou 2, caractérisé en ce que chaque doigt (8) est conformé en levier à deux bras dont l'axe de pivotement (9) se trouve entre l'une des parties d'extrémité formant la partie de surface active (12) et le point d'application de l'élément ressort (13 ; 20 ; 23).

4. Elément sélecteur suivant l'une des revendications précédentes, caractérisé en ce que chaque doigt (28) est conformé en levier à un bras, dans lequel aussi bien l'une des parties d'extrémité formant la partie de surface active (12) que le point d'application de l'élément ressort (30) se trouvent du même côté de l'axe de pivotement (31) du doigt (28).

5. Elément sélecteur suivant la revendication 1, caractérisé en ce que les doigts (41) sont montés mobiles en étant guidés en ligne droite sur la plaque porteuse (1).

6. Elément sélecteur suivant la revendication 5, caractérisé en ce que les doigts (41) sont guidés de telle façon que leurs parties de surfaces actives (12) soient dirigées en partie à l'encontre du sens de rotation (10) de la plaque à trous (4).

7. Elément sélecteur suivant l'une des revendications précédentes, caractérisé en ce que les éléments ressorts (13 ; 20 ; 44) des divers doigts sont réalisés en ressorts hélicoïdaux.

8. Elément sélecteur suivant l'une des revendications 1 à 7, caractérisé en ce que les éléments ressorts (23) des divers doigts sont réalisés en ressorts à lame.

9. Elément sélecteur suivant l'une des revendications précédentes, caractérisé en ce que les parties de surfaces actives (12) des divers doigts (8 ; 28 ; 41) sont inclinées par rapport au cercle de trous (5) et par rapport à la plaque à trous.

10. Elément sélecteur suivant l'une des revendications précédentes, caractérisé en ce que chaque partie de surface active (12) considérée dans le sens de rotation (10) de la plaque à trous (4) s'approche, en forme d'arc, du cercle de trous (5).

11. Elément sélecteur suivant l'une des revendications précédentes, caractérisé en ce que tous les doigts (8 ; 28 ; 41) sont congruents les uns par rapport aux autres.

**FIG.1**

**FIG.2**

**FIG.6**

FIG.3

FIG.4

# FIG.5